# EUROPÄISCHE PATENTSCHRIFT

(11) **EP 1 641 909 B1**
(45) Veröffentlichungstag und Bekanntmachung des Hinweises auf die Patenterteilung: **11.10.2006**
(21) Anmeldenummer: 04738076.1
(22) Anmeldetag: 08.07.2004
(51) Int. Cl.: C12C 1/027

(54) **VORRICHTUNG ZUM MÄLZEN VON GETREIDE**
DEVICE FOR CEREAL MALTING
DISPOSITIF POUR LE MALTAGE DE CEREALES

(30) Priorität: 09.07.2003 NL 1023868
(43) Veröffentlichungstag der Anmeldung: 05.04.2006
(73) Patentinhaber: Bühler AG, 9240 Uzwil (CH)
(72) Erfinder: SWINKELS, Gerardus, NL-5735 RA Aarle Rixtel (NL)
(74) Vertreter: Frommhold, Joachim
(86) Internationale Anmeldenummer: PCT/CH2004/000435
(87) Internationale Veröffentlichungsnummer: WO 2005/005592

(56) Entgegenhaltungen:
- DE-A- 2 121 586
- DE-C- 17 932
- DE-C- 732 739
- US-A- 915 968

## Beschreibung

Die Erfindung betrifft eine Vorrichtung zum Mälzen von Getreide, einen Turm mit einer Anzahl von Etagen umfassend, die voneinander durch Etagenböden getrennt sind, jede Etage umfasst einen luftdurchlässigen Tragboden zur Unterstützung des zu keimenden Getreides, weiterhin Luftkonditionierungsmittel zum Konditionieren von Luft und Verlagerungsmittel, sie ist mit einem Zufuhrkanal und einem Abfuhrkanal zum Verlagern von konditionierter Luft über den Zufuhrkanal versehen, welcher sich ab den Luftkönditionierungsmitteln zur Unterseite eines Tragbodens, durch den Tragboden und eine darauf gelegene Getreideschicht zur Oberseite der Getreideschicht, und über den Abfuhrkanal weg von der Oberseite der Getreideschicht erstreckt, wobei sich der Zufuhrkanal und der Abfuhrkanal durch eine zentrale Öffnung in mindestens einem Etagenboden erstreckt.

Eine gattungsgemässe Vorrichtung ist seit 1972 am Gelände der Firma Bavaria N.V. in Lieshout, Niederlande, in Betrieb. Diese Vorrichtung weist einen Turm mit ringförmigen, um eine Achse rotierbare Tragböden auf, die sich zwischen zwei übereinander gelegenen Etagenböden befinden. Eine führende Unterstützung der Tragböden erfolgt sowohl am Innendurchmesser als auch am Aussendurchmesser. Der Innendurchmesser des ringförmigen Tragbodens beträgt 6 Meter, während der Aussendurchmesser des Tragbodens (sowie der Etagenböden) 20 Meter beträgt. Das Zuführen von konditionierter Luft erfolgt über eine absperrbare Öffnung in der Seitenwand des Turms, wobei auch konditionierte Luft, nach der Passage einer Getreideschicht auf einem Tragboden, den Turm wieder über eine Öffnung in der Seitenwand des Turms verlässt. Obwohl der Turm gemäss dem Stand der Technik technologisch hervorragend entspricht, besteht ein Bedarf, die Leistung solcher Vorrichtungen weiter zu steigern. Eine auf den ersten Blick logische Lösung dafür scheint im Vergrössern des Aussendurchmessers des Tragbodens gelegen zu sein, so dass eine grössere Menge Getreide pro Tragboden behandelt werden kann. Eine solche Lösung ist jedoch praktisch gesehen wegen konstruktiver Einschränkungen nicht durchführbar, wobei zu sehen ist, dass bei Vergrösserung des Aussendurchmessers des Tragbodens das Gewicht der Getreideschicht auf den Tragboden quadratisch zunimmt und auch die Länge der Überspannung zunimmt. Diese Angabe in Kombination mit der Tatsache, dass es häufig erwünscht ist, die Tragböden rotierbar um ihre senkrechte Herzlinie auszuführen, ist die Ursache dafür, dass es technisch nicht, jedenfalls nicht auf wirtschaftlich verantwortbare Weise möglich ist, um eine Vorrichtung so zu konstruieren. Daneben besteht im Allgemeinen mindestens aus konstruktivem Gesichtspunkt heraus ein Bedarf, die Tragekonstruktion für die Tragböden möglichst leicht auszuführen.

Die Erfindung hat die Aufgabe eine Vorrichtung zum Mälzen von Getreide zu schaffen, mit der es im Prinzip möglich ist, auf wirtschaftlich Weise eine wesentliche Leistungszunahme zu realisieren und/oder bei gleichbleibender Leistung eine leichtere Tragekonstruktion für die Tragböden anwenden zu können. Dazu ist die Vorrichtung gemäss der Erfindung dadurch gekennzeichnet, dass der Zufuhrkanal und/oder der Abfuhrkanal sich durch eine zentrale Öffnung in mindestens einem Etagenboden erstrecken. Die Erfindung beruht auf der Ansicht, dass es möglich ist, die Leistung einer Vorrichtung zu vergrössern, indem der Innendurchmesser und den Aussendurchmesser eines Tragbodens in absolutem Sinn in gleich grossem Masse vergrössert werden kann, so dass die Länge der radialen Überspannung gleich bleibt aber zugleich eine grössere Anzahl von radialen Unterstützungen zum Tragen des grösseren Gewichts der Getreideschicht, die auf dem Tragboden gelegen ist, angewendet werden kann. Daneben oder alternativ ist es bei einem mehr oder weniger gleichbleibendem Leistungsbedarf möglich, den Aussendurchmesser in absolutem Sinn weniger als den Innendurchmesser zunehmen zu lassen, so dass die Länge der radialen Überspannung geringer wird, wodurch im Prinzip eine leichtere Tragekonstruktion für die Tragböden angewendet werden kann.

Daneben kann auch die Länge einer eventuell radial gerichteten Winde, die angewendet wird, um den Tragboden zu beladen oder zu entladen, verkürzt werden, während auch die Anzahl von Rührelementen, die gewöhnlich in einer radialen Reihe angeordnet sind, geringer sein kann. Ausserdem wird sich Getreide, welches nahe dem Innendurchmesser auf dem Tragboden gelegen ist, einfacher mechanisch verarbeiten lassen je nach Grösse des Innendurchmessers.

Um eine solche Konstruktion wirtschaftlich zu gestalten, ist mindestens der Raum innerhalb des Innendurchmessers eines Etagenbodens, mit vergleichbaren Abmessungen wie jene des Tragbodens, gemäss der Erfindung zum Durchführen eines (Teils des) Zufuhrkanals und (eines Teils des) Abfuhrkanals nützlich verwendet. Dies bringt ausserdem den Vorteil, dass an der Aussenseite des Turms im Prinzip keine Einrichtungen vorhanden sein müssen zum Zuführen von konditionierter Luft zur Unterseite eines beladenen Tragbodens und zum Abführen von "verbrauchter" Luft ab der Oberseite der Getreideschicht, obwohl solche Vorrichtungen an der Aussenseite des Turms innerhalb des Rahmens der Erfindung an sich vorhanden sein können, vorausgesetzt, dass sich der Zufuhrkanal und der Abfuhrkanal (teilweise) durch die zentrale Öffnung erstreckt.

Eine weitere Verbesserung hinsichtlich der Benützung des zentralen Raums innerhalb des Innendurchmessers wird erhalten, wenn sich der Zufuhrkanal und der Abfuhrkanal durch eine zentrale Öffnung in mindestens einem Etagenboden erstrecken.

Vorzugsweise mündet der Abfuhrkanal bei den Luftkonditionierungsmitteln. Somit fungiert der Abfuhrkanal als Rückleitung und es kann mindestens ein Teil der (konditionierten) Luft zirkuliert werden, was eine positive Auswirkung auf den Energieverbrauch hat. Das Mass, in dem die Luft konditioniert zirkuliert, kann mit Regelungsmitteln geregelt werden, die das Verhältnis zwischen konditionierter Luft, die zu den Luftkonditionierungsmitteln zurückgeführt wird und konditionierter Luft, die zur Aussenumgebung abgeführt wird, regeln.

Alternativ oder in Kombination mit der oben genannten bevorzugten Ausführungsform ist die Vorrichtung gemäss der Erfindung vorzugsweise weiter dadurch gekennzeichnet, dass der Abfuhrkanal in der Aussenumgebung des Turms mündet. Wenn diese bevorzugte Ausführungsform mit der vorigen bevorzugten Ausführungsform kombiniert wird, ist vorzugsweise von einem verzweigten Abfuhrkanal die Rede, wobei ein erster verzweigter Teil des Abfuhrkanals in die Aussenumgebung des Turms mündet und ein zweiter verzweigter Teil des Abfuhrkanals bei den Luftkonditionierungsmitteln mündet. Auch der Raum über der Getreideschicht kann dabei als Verzweigung dienen, indem dieser Raum sowohl eine Öffnung für eine Rückleitung zum Beispiel an der radialen Innenseite des Raums hat als auch eine Öffnung (mit regelbarer Grösse) zur Aussenumgebung des Turms, zum Beispiel an der radialen Aussenseite des Raums. Mittels eines geeigneten Ventilsystems ist es möglich, eine gewünschte Verteilung der Menge Luft zu erzeugen, die ab der Oberseite der Getreideschicht zu den Luftkonditionierungsmitteln (zurück)geführt wird und welche zur Aussenumgebung des Turm abgeführt wird.

Vor allem im Zusammenhang mit der aus energetischen Überlegungen günstigen Zirkulation ist bevorzugt, dass der Zufuhrkanal und der Abfuhrkanal, die zum selben Tragboden gehören, sich angrenzend durch eine zentrale Öffnung in einem Etagenboden erstrecken. Somit kann ein Zirkulationskreis relativ einfach gestaltet werden.

Weiter ist bevorzugt, dass die mindestens eine zentrale Öffnung, durch welche sich der Zufuhrkanal und der Abfuhrkanal erstreckt, kreisförmig ist. Ein solcher Querschnitt ist vor allem vorteilhaft, wenn der Tragboden entsprechend einer weiteren Ausführungsform rotierbar ausgeführt ist.

Bei einer kreisförmigen zentralen Öffnung ist bevorzugt, dass der Zufuhrkanal und der Abfuhrkanal an der Stelle der mindestens einen zentralen Öffnung einen mindestens hauptsächlich segmentförmigen Querschnitt hat, worunter zumindest auch eine abgestumpfte Segmentform zu verstehen ist.

Die Vorteile der Erfindung kommen vor allem zum Ausdruck, wenn der Durchmesser der mindestens einen kreisförmigen zentralen Öffnung eine Grösse von mindestens 10 Metern und weiter vorzugsweise von mindestens 12 Metern hat. Bei einem solchen Durchmesser ist nämlich ausreichend durchströmte Oberfläche zum Vorsehen einer Anzahl von Stockwerken mit ausreichend konditionierter Luft vorhanden.

Eine Leistungserhöhung gegenüber der Vorrichtung gemäss dem Stand der Technik kann erreicht werden, indem jeder Tragboden hauptsächlich ringförmig ist, wobei die Grösse des Innendurchmessers mindestens 10 Meter ist und weiter vorzugsweise 12 Meter ist.

Der Tragboden hat dabei vorzugsweise eine radiale Überspannung zwischen dem Innendurchmesser und dem Aussendurchmesser von mindestens 7 Metern, wodurch pro Längeneinheit Überspannungslänge eine gegenüber dem Stand der Technik vergrösserte Tragleistung erhalten wird.

Die Vorteile der Erfindung sind vor allem sichtbar, wenn der Tragboden um eine Rotationsachse rotieren kann, die sich durch die Herzlinie der Ringform erstreckt. Wenn der Tragboden rotierbar ist, kann der Ladeboden durch eine Winde, die sich in radiale Richtung erstreckt, einfach beladen beziehungsweise entladen werden.

Ein kompakter Entwurf mit beschränkter Raumbeanspruchung kann erhalten werden, wenn sich die Luftkonditionierungsmittel unter dem Niveau des Etagenbodens unter dem untersten Tragboden für das zu keimende Getreide befinden, oder wenn sich die Luftkonditionierungsmittel über dem Niveau des Etagenbodens über dem obersten Tragboden des Turms befinden. Alternativ oder ergänzend ist es auch möglich, dass solche Vorrichtungen im Zufuhrkanal anwesend sind, insoweit sich diese durch die zentrale Öffnung erstrecken. Dabei kann vor allem an adiabatische Kühlmittel gedacht werden, wobei Wasserverdampfung auftritt.

Alternativ oder in Kombination ist bevorzugt, dass sich die Luftkonditionierungsmittel innerhalb des Aussenumfangs der Etagenböden befinden, um die Konstruktion der Vorrichtung kompakt zu halten.

Aus logistischem Gesichtspunkt ist weiterhin bevorzugt, dass ein weiterer Tragboden zur Unterstützung von zu trocknendem, gekeimten Getreide unter dem Niveau des Etagenbodens unter dem untersten Tragboden für das zu keimende Getreide vorgesehen ist. Somit kann auf einfache Weise gekeimtes Getreide unter Verwendung der Schwerkraft zum weiteren Tragboden verlagert werden, wo der Trockenprozess stattfinden kann.

Sowohl aus konstruktiven als auch aus technologischen Gesichtspunkten ist dabei bevorzugt, dass der weitere Tragboden für das zu trocknende gekeimte Getreide ähnliche Abmessungen wie die Tragböden für das zu keimende Getreide hat.

Die Erfindung wird nachfolgend anhand der Beschreibung einer bevorzugten Ausführungsform der Vorrichtung näher erläutert, wobei auf die Figuren verwiesen wird.
- Figur 1: zeigt eine Perspektivansicht einer Malzvorrichtung gemäss der Erfindung mit zwei Türmen, von denen einer nur teilweise sichtbar ist und der andere teilweise geöffnet ist;
- Figur 2: zeigt eine geöffnete und teilweise transparente Perspektivansicht eines Turms gemäss Figur 1.

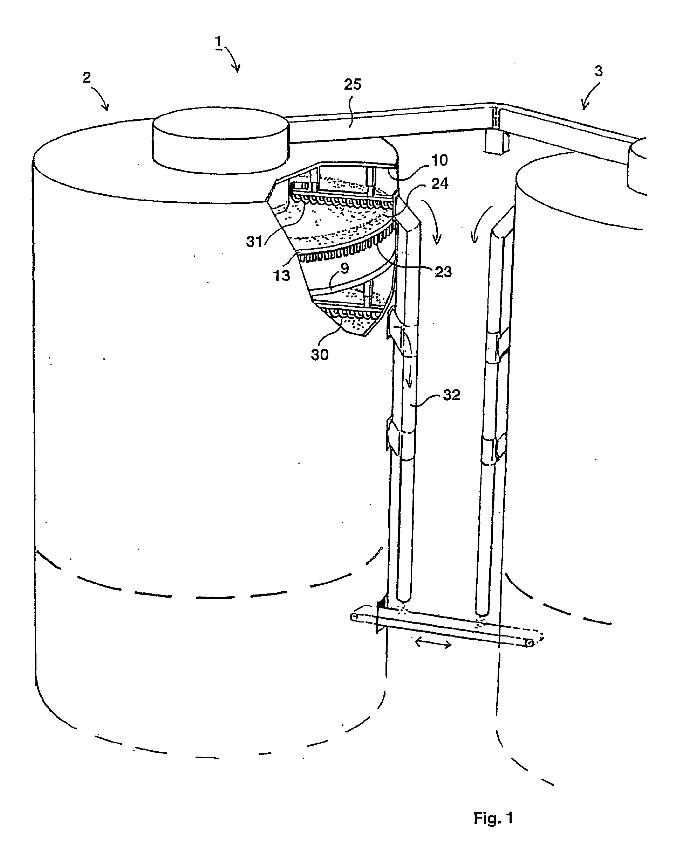

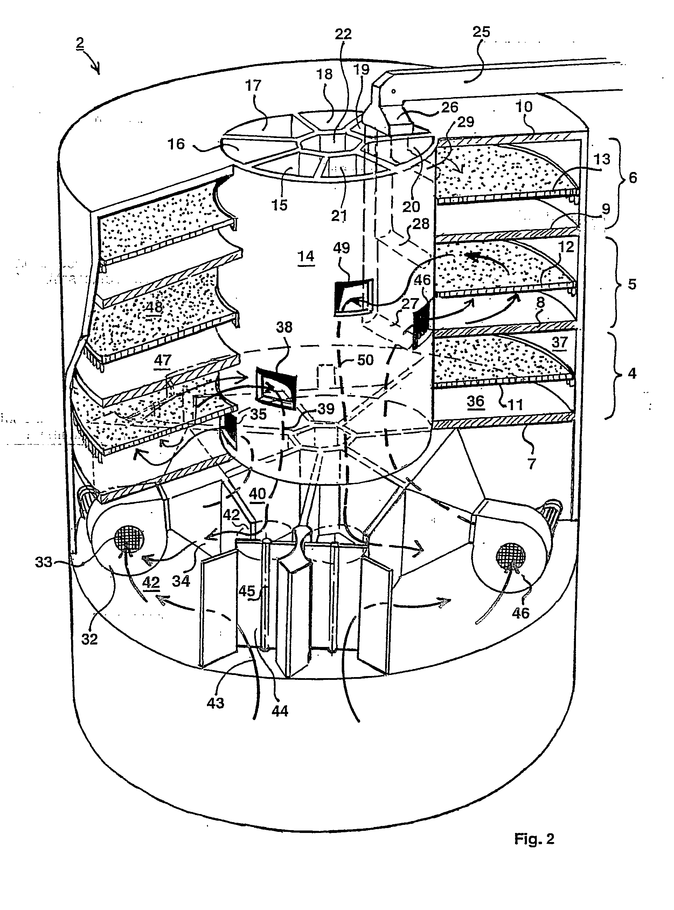

Figur 1 zeigt eine erfindungsgemässe Mälzerei 1, die dergestalt doppelt ausgeführt ist, dass zwei Türme 2, 3 vorhanden sind. Figur 2 zeigt den Turm 2 im Detail. Turm 2 umfasst drei Etagen 4, 5, 6, die von Etagenböden 7, 8, 9, 10 definiert sind, wobei der Etagenboden 10 auch das Dach des Turms 2 bildet. Obwohl auf die vorliegende Ausführungsform nicht zutreffend, ist es denkbar, dass auf dem Dach noch ein Weichraum steht, in dem Getreide vorangehend zum Mälzen geweicht wird.

Zwischen den entsprechenden Etagenböden 7 8, 9, 10 befinden sich Tragböden 11, 12, 13. Sowohl die Etagenböden 7, 8, 9, 10 als auch die Tragböden 11, 12, 13 sind ringförmig, wodurch innerhalb der entsprechenden Innendurchmesser der Etagenböden und Tragböden ein zylindrischer Raum 14 vorhanden ist. Dieser zylindrische Raum 14 ist in sieben übereinstimmende senkrecht laufende Kanäle 15, 16, 17, 18, 19, 20, 21 aufgeteilt, welche alle in waagrechtem Querschnitt eine identische Form haben, nämlich jene eines abgestumpften Segments. Zwischen den Kanälen 14 bis 21 befindet sich ein zentraler Durchgang 22. Die Kanäle 15 bis 21 erstrecken sich über die gesamte Höhe der Etagen 4 bis 6 und werden durch radiale Zwischenwände voneinander getrennt, die sich auch noch bis unter Niveau 4 erstrecken, wo sich noch näher zu besprechende Luftkonditionierungsmittel befinden.

Die Tragböden 11, 12, 13 sind mittels nicht näher gezeigter Antriebsmittel um die Herzlinie des Turms 2 rotierbar, wozu die Tragböden 11, 12, 13 sowohl an ihrem Innendurchmesser als auch an ihrem Aussendurchmesser führend von Rollkörpern unterstützt werden. In Figur 1 sind Rollkörper 23 am Aussendurchmesser des Tragbodens 13 sichtbar. Die Tragböden 11, 12, 13 sind so perforiert, dass sie einerseits für Luft durchlässig sind, insbesondere für konditionierte Luft, aber andererseits doch in der Lage sind, eine Schicht zu keimenden Getreides 24 zu tragen.

Die Zufuhr von Getreide zu den entsprechenden Tragböden 11, 12, 13 erfolgt über die Zufuhrleitung 25 über dem Dach 10 des Turms 2. Obwohl in Figur 1 die Zufuhrleitungen 25 für die Türme 2 und 3 miteinander einen Winkel bilden, ist es auch denkbar oder sogar vorteilhafter, dass die beiden Zufuhrleitungen in gegenseitiger Verlängerung gelegen sind und ein gemeinsames Förderband umfassen, das in zwei entgegengesetzte Richtungen antreibbar ist und worauf zu mälzendes Getreide geschüttet werden kann. Die Zufuhrleitung 25 biegt gerade über dem Kanal 19 nach unten ab und über dem Verteilelement 26 in drei Verzweigungsleitungen 27, 28, 29. Die Verzweigungsleitungen 27, 28, 29 biegen an ihren untersten Enden in radiale Richtung nach aussen hin ab, wodurch sie über den entsprechenden Tragböden 11, 12, 13 münden. Innerhalb des Verteilelements 26 befindet sich ein Verteilorgan, mit dem es möglich ist, um Getreide selektiv über die entsprechenden Verzweigungsleitungen 27, 28, 29 laufen zu lassen, somit die Tragböden mit Getreide zu beladen. Über diesen Tragböden 11, 12, 13 befindet sich ein in sich radialer Richtung erstreckender Wender. In Figur 1 sind die Wender 30, 31 entsprechend über den Tragböden 12, 13 sichtbar.

Durch einen geeigneten Antrieb sowohl für die Rotation eines Tragbodens 11, 12, 13 wie der dazugehörenden Wender 30, 31 kann der entsprechende Tragboden 11, 12, 13 mit einer Getreideschicht mit einer einheitlichen Stärke versehen werden. In Betracht ziehend, dass der Innendurchmesser der Tragböden 11, 12, 13 12 Meter beträgt und der Aussendurchmesser 32 Meter, während eine typische Höhe der Getreideschicht auf einem Tragboden 1,2 - 1,4 Meter beträgt, beträgt das Gewicht der Getreideschicht, die von einem Tragboden 11, 12, 13 getragen wird, ca. 440'000 kg (Ausgangsprodukt). Die Tragböden 11, 12, 13 sind daher an ihren Unterseiten mit radialen Tragebalken konstruiert, um dieses enorme Gewicht tragen zu können.

Um das Getreide auf dem Tragboden 11, 12, 13, das vorangehend an den Transport zu den Tragböden 11, 12, 13 befeuchtet wird, langsam keimen zu lassen, ist es notwendig das Getreide einer Luftbehandlung mit konditionierter Luft zu unterziehen, wobei Enzyme die Zellwände in den Getreidekörnern aufbrechen, so dass die Stärke in den Getreidekörnern zugänglich wird. Übrigens wird dieser Keimungsprozess innerhalb des Turms 2 rechtzeitig abgebrochen, um zu vermeiden, dass die Getreidekörner tatsächlich zu einem Pflänzchen auswachsen. Für dieses Abbrechen des Keimungsprozesses werden die Getreidekörner in einer anderen Anlage getrocknet. Dieses Trocknen wird auch als das Darren bezeichnet.

In Figur 1 ist sichtbar, dass sich am Ende eines jeden Wenders 30, 31 an der Aussenseite des Turms 2 (und 3) eine Abfuhröffnung befindet, die an eine senkrechte Fallröhre 32 anschliesst, die an ihrer offenen Unterseite über einem Transportband mündet, über welches das gekeimte Getreide zu einer Trockenvorrichtung unten im Turm 2 zugeführt werden kann. Das Keimen des Getreides nimmt etwa 6 Tage in Anspruch, während der Trockenprozess nur etwa 1 Tag in Anspruch nimmt.

Um das Getreide den Tragböden 11, 12, 13 zu bearbeiten, umfasst der Turm 2 für jeden Tragboden 11, 12, 13 separate Vorrichtungen, sowohl für das Verlagern von Luft entlang der entsprechenden Getreideschichten als auch für das Konditionieren dieser Luft. Typische Konditionierungszustände für diese Luft sind 12 - 18 °C und eine Luftfeuchte von 40 - 100 %. Daneben ist je nach Fortschritt des Keimprozesses ein CO₂ Prozentsatz bis etwa 2 % anwendbar.

Im weiteren wird die Funktion der Vorrichtung für Getreide, gelegen auf dem untersten Tragboden 11, erläutert. Unter dem Etagenboden 7 befindet sich ein Ventilator mit einer Ansaugöffnung 33 und einer auslaufenden Blasmündung 34. Diese Blasmündung 34 mündet unter dem untersten Ende des Kanals 16. Im Kanal 16 ist auf dem Niveau des Tragbodens 11 eine nicht näher gezeigte waagerechte Trennwand angeordnet. Zwischen Etagenboden 7 und Tragboden 11 befindet sich innerhalb des Kanals 16 eine Ausflussöffnung 35 an der Aussenseite des zylindrischen Raums 14. Über diese Ausflussöffnung 35 gelangt konditionierte Luft, die vom Ventilator 32 zugeführt wird, in den ringförmigen Raum 36 zwischen Etagenboden 7 und Tragboden 11. Indem in diesem Raum 36 ein Überdruck herrscht, während im ringförmigen Raum 37 zwischen Tragboden 11 und Etagenboden 8 ein niedrigerer Überdruck herrscht, durchströmt die konditionierte Luft durch den durchlässigen Tragboden 11 und die vom Tragboden 11 getragene Getreideschicht. Luft innerhalb des ringförmigen Raums 37 verlässt diesen Raum 37 wieder über die Durchflussöffnung 38 an der Aussenseite des zylindrischen Raums 14, der an den Kanal 15 grenzt und zwischen dem Niveau von Tragboden 11 und Etagenboden 8 gelegen ist. Sowohl über als auch unter der Öffnung 18 befindet sich innerhalb des Kanals 15 ein Ventil, mit dem es möglich ist zu regeln, welcher Teil der Luft jene Öffnung 38 durchfliesst, nach oben hin in den Kanal 15 abbiegt, um somit den Turm 2 zu verlassen oder nach unten hin abbiegt gemäss Pfeil 39. Dieser Teil der Luft ist dazu bestimmt rezirkuliert zu werden und wird vom des Ventilators 32 angesaugt.

Der Kanal 15 mündet an seinem unteren Ende in einer Unterdruckkammer 40 mit einer Ausflussöffnung zur Ansaugkammer 42 mit darin befindlichen Ansaugöffnung 33. Die Ansaugkammer 42 ist ebenfalls für Umgebungsluft gemäss Pfeil 43 erreichbar, wozu selbstverständlich in der Aussenwand von Turm 2 eine geeignete (nicht näher gezeigte) Öffnung vorgesehen ist. Das Verhältnis zwischen rezirkulierter Luft (Pfeil 39) und Aussenluft (Pfeil 43), die vom Ventilator 32 angesaugt wird, kann durch das Einstellen des Drehtürventils 44, das um eine Rotationsachse 45 rotierbar ist, bestimmt werden. Mit diesem Drehtürventil 44 ist es sowohl möglich, die Unterdruckkammer 40 völlig abzuschliessen, wobei der Ventilator 32 nur Aussenluft (Pfeil 43) ansaugt als auch zu vermeiden, dass Aussenluft (Pfeil 43) angesaugt wird und der Ventilator 32 nur Luft ansaugt, die bereits mindestens einmal die Getreideschicht auf den Tragboden 11 passiert hat (Pfeil 39). Die Mittel zum Konditionieren der Luft wie Kühlblöcke, um die Luft auf die richtige Temperatur zu bringen und Vernebler, um die Luft auf die richtige Feuchtigkeit zu bringen, sind in der Figur 2 nicht dargestellt, könnten aber zum Beispiel in der Ansaugkammer 42 befinden oder in bzw. an der Blasmündung 34.

Das Behandeln der Getreideschicht auf dem Tragboden 12 erfolgt in völlig vergleichbarer Weise. Mittels Ventilator 46 wird Luft ab der Unterseite in den Kanal 20 geblasen, um über die Ausflussöffnung 46 den ringförmigen Raum 47 zwischen Etagenboden 8 und Tragboden 12 zu erreichen. Anschliessend passiert die Luft den Tragboden 12 und die darauf gelegene Getreideschicht, wonach die Luft den ringförmigen Raum 48 zwischen Tragboden 12 und Etagenboden 9 über die Durchflussöffnung 49 wieder verlässt. Abhängig von den Ständen der diversen geeigneten Ventile verlagert sich die Luft anschliessend nach oben, um den Turm 2 über das obere Ende des Kanals 21 zu verlassen beziehungsweise nach unten (gemäss Pfeil 50) wegen der ansaugenden Wirkung des Ventilators 46.

Auch für die Getreideschicht 24 auf dem Tragboden 13 sind vergleichbare Einrichtungen vorgesehen, wobei über die Unterseite des Kanals 18 konditionierte Luft der Getreideschicht 24 zugeführt wird und Luft, die die Getreideschicht 24 passiert hat, entweder über den Kanal 17 ausserhalb des Turms 2 abgeführt wird oder zum Ventilator, der zum Boden 13 gehört, zurückgeführt wird.

Die beschriebene Mälzerei bietet den Vorteil einer vergrösserten und wirtschaftlichen Leistung wegen des relativ grossen Innendurchmessers der Tragböden 11, 12, 13 indem der zylindrische Raum 14 benützt wird zum Akkomodieren von erforderlichen Leitungen zum Zuführen und Abführen von konditionierter Luft hin zu einer Getreideschicht und von dieser Getreideschicht weg. Auch wird der zylindrische Raum 14 zum Zuführen von Getreide zu den entsprechenden Tragböden 11, 12, 13 verwendet. Daneben wird der siebente Kanal 17 für die Abfuhr und Zufuhr von Wasser, Energie (Elektrizität) und Luft bzw. Druckluft benützt.

## Patentansprüche

1. Vorrichtung zum Mälzen von Getreide, umfassend einen Turm mit einer Anzahl von Etagen, die voneinander durch Etagenböden getrennt sind, wobei jede Etage einen luftdurchlässigen Tragboden (11, 12, 13) zur Unterstützung des zu keimenden Getreides umfasst, und die Vorrichtung weiter Luftkonditionierungsmittel zum Konditionieren von Luft und Verlagerungsmittel aufweist, weiterhin versehen mit einem Zufuhrkanal und einem Abfuhrkanal zum Verlagern von konditionierter Luft über den Zufuhrkanal, welcher sich ab den Luftkonditionierungsmitteln zur Unterseite eines Tragbodens (11, 12, 13), durch den Tragboden und eine darauf gelegene Getreideschicht zur Oberseite der Getreideschicht (24), und über den Abfuhrkanal weg von der Oberseite der Getreideschicht erstreckt, **dadurch gekennzeichnet, dass** sich der Zufuhrkanal und der Abfuhrkanal (15 bis 21) durch eine zentrale Öffnung (35, 38, 46, 49) in mindestens einem Etagenboden (7, 8, 9, 10) erstrecken.

2. Vorrichtung nach Anspruch 1, **dadurch gekennzeichnet, dass** der Abfuhrkanal bei den Luftkonditionierungsmitteln (48) mündet.

3. Vorrichtung nach Anspruch 1 oder 2, **dadurch gekennzeichnet, dass** der Abfuhrkanal in der Aussenumgebung des Turms (2, 3) mündet.

4. Vorrichtung nach einem der vorhergehenden Ansprüche, **dadurch gekennzeichnet, dass** der Zufuhrkanal und der Abfuhrkanal, die zum selben Tragboden (11, 12, 13) gehören, sich angrenzend aneinander durch eine zentrale Öffnung in einem Etagenboden (7, 8, 9, 10) erstrecken.

5. Vorrichtung nach einem der vorhergehenden Ansprüche, **dadurch gekennzeichnet, dass** die mindestens eine zentrale Öffnung, durch welche sich der Zufuhrkanal und der Abfuhrkanal erstreckt, kreisförmig ist.

6. Vorrichtung nach Anspruch 5, **dadurch gekennzeichnet, dass** der Zufuhrkanal und/oder der Abfuhrkanal an der Stelle der mindestens einen zentralen Öffnung einen mindestens hauptsächlich segmentförmigen Querschnitt hat.

7. Vorrichtung nach Anspruch 4 oder 5, **dadurch gekennzeichnet, dass** der Durchmesser der mindestens einen zentralen Öffnung eine Grösse von mindestens 10 Metern hat und weiter vorzugsweise von mindestens 12 Metern hat.

8. Vorrichtung nach einem der vorhergehenden Ansprüche, **dadurch gekennzeichnet, dass** jeder Tragboden (11, 12, 13) ringförmig ist, wobei die Grösse des Innendurchmessers mindestens 10 Meter beträgt und weiter vorzugsweise mindestens 12 Meter beträgt.

9. Vorrichtung nach Anspruch 8, **dadurch gekennzeichnet, dass** der Tragboden (11, 12, 13) eine radiale Überspannung von mindestens 7 Metern zwischen dem Innendurchmesser und dem Aussendurchmesser hat.

10. Vorrichtung nach Anspruch 7, 8 oder 9, **dadurch gekennzeichnet, dass** der Tragboden (11, 12, 13) um eine Rotationsachse rotieren kann, die sich durch die Herzlinie der Ringform erstreckt.

11. Vorrichtung nach einem der vorhergehenden Ansprüche, **dadurch gekennzeichnet, dass** sich die Luftkonditionierungsmittel unter dem Niveau des Etagenbodens (7) unter dem untersten Tragboden (11) für das zu keimende Getreide befinden.

12. Vorrichtung nach einem der vorhergehenden Ansprüche, **dadurch gekennzeichnet, dass** sich die Luftkonditionierungsmittel über dem Niveau des Etagenbodens über dem obersten Tragboden (13) des Turms (1, 2) befinden.

13. Vorrichtung nach einem der vorhergehenden Ansprüche, **dadurch gekennzeichnet, dass** sich die Luftkonditionierungsmittel innerhalb des Aussenumfangs der Etagenböden befinden.

14. Vorrichtung nach einem der vorhergehenden Ansprüche, **dadurch gekennzeichnet, dass** ein weiterer Tragboden zur Unterstützung von zu trocknendem, gekeimten Getreide unter dem Niveau des Etagenbodens unter dem untersten Tragboden für das zu keimende Getreide vorgesehen ist.

15. Vorrichtung nach Anspruch 14, **dadurch gekennzeichnet, dass** der weitere Tragboden für das zu trocknende, gekeimte Getreide ähnliche Abmessungen hat wie die Tragböden für das zu keimende Getreide.

16. Vorrichtung nach Anspruch 1, **dadurch gekennzeichnet, dass** der Tragboden (11, 12, 13) luftdurchlässig, bevorzugt perforiert ist.

## Claims

1. A device for malting grain, comprising a tower with a number of levels, each separated from the other by level floors, wherein each level has an air-permeable load-bearing floor (11, 12, 13) to support the grain to be germinated, and the device additionally has air conditioning means for conditioning air and displacement means, further provided with a supply channel and discharge channel for displacing conditioned air over the supply channel, which extends from the air conditioning means toward the bottom side of a load-bearing floor (11, 12, 13), through the load-bearing floor and a layer of grain lying thereon toward the top side of the grain layer (24), and via the discharge channel away from the top side of the grain layer, **characterized in that** the supply channel and discharge channel (15 to 21) extend through a central opening (35, 38, 46, 49) in at least one level floor (7, 8, 9, 10).

2. The device according to claim 1, **characterized in that** the discharge channel empties into the air conditioning means (48).

3. The device according to claim 1 or 2, **characterized in that** the discharge channel empties into the outside environment of the tower (2, 3) .

4. The device according to one of the preceding claims, **characterized in that** the supply channel and discharge channel, which are part of the same load-bearing floor (11, 12, 13), abut each other and extend through a central opening in a level floor (7, 8, 9, 10).

5. The device according to one of the preceding claims, **characterized in that** the at least one central opening through which the supply channel or discharge channel extends is circular.

6. The device according to 5, **characterized in that** the supply channel and /or the discharge channel has an at least primarily segment-shaped cross-section at the location of the at least one central opening.

7. The device according to claim 4 or 5, **characterized in that** the diameter of the at least one central opening is at least 10 meters in size, and more preferably at least 12 meters in size.

8. The device according to one of the preceding claims, **characterized in that** each load-bearing floor (11, 12, 13) is annular, wherein the size of the interior diameter is at least 10 meters, and more preferably at least 12 meters.

9. The device according to 8, **characterized in that** the load-bearing floor (11, 12, 13) has a radial overlap of at least 7 meters between the interior diameter and exterior diameter.

10. The device according to claim 7, 8 or 9, **characterized in that** the load-bearing floor (11, 12, 13) can turn around a rotational axis, that extends through the heart line of the annular form.

11. The device according to one of the preceding claims, **characterized in that** the air conditioning means are located under the level floor (7) under the lowermost load-bearing floor (11) for the grain to be germinated.

12. The device according to one of the preceding claims, **characterized in that** the air conditioning means are located over the level floor over the uppermost load-bearing floor (13) of the tower (1, 2).

13. The device according to one of the preceding claims, **characterized in that** the air conditioning means are located inside the outer periphery of the level floors.

14. The device according to one of the preceding claims, **characterized in that** another load-bearing floor is provided to support germinated grain to be dried under the level floor under the lowermost load-bearing floor for the grain to be germinated.

15. The device according to claim 14, **characterized in that** the additional load-bearing floor for the germinated grain to be dried has dimensions similar to the load-bearing floors for the grain to be germinated.

16. The device according to claim 1, **characterized in that** the load-bearing floor (11, 12, 13) is permeable to air, preferably perforated.

## Revendications

1. Dispositif de maltage de céréales, comprenant une tour avec un nombre d'étages, qui sont séparés les uns des autres par des fonds d'étages, chaque étage comprenant un fond porteur (11, 12, 13) perméable à l'air pour soutenir les céréales à faire germer, et le dispositif comportant par ailleurs des moyens de conditionnement d'air pour conditionner de l'air et des moyens de déplacement, muni par ailleurs d'un conduit d'alimentation et d'un conduit d'évacuation pour déplacer de l'air conditionné via le conduit d'alimentation, qui s'étend à partir des moyens de conditionnement d'air vers la face inférieure d'un fond porteur (11, 12, 13), à travers le fond porteur et une couche de céréales posée sur ce dernier vers la face supérieure de la couche de céréales (24), et au-dessus du conduit d'évacuation en s'éloignant de la face supérieure de la couche de céréales, **caractérisé en ce que** le conduit d'alimentation et le conduit d'évacuation (15 à 21) s'étendent à travers une ouverture centrale (35, 38, 46, 49) dans au moins un fond d'étage (7, 8, 9, 10).

2. Dispositif selon la revendication 1, **caractérisé en ce que** le conduit d'évacuation débouche près des moyens de conditionnement d'air (48).

3. Dispositif selon la revendication 1 ou 2, **caractérisé en ce que** le conduit d'évacuation débouche dans l'environnement extérieur de la tour (2, 3).

4. Dispositif selon l'une quelconque des revendications précédentes, **caractérisé en ce que** le conduit d'alimentation et le conduit d'évacuation qui font partie du même fond porteur (11, 12, 13) s'étendent en étant mutuellement adjacents à travers une ouverture centrale dans un fond d'étage (7, 8, 9, 10).

5. Dispositif selon l'une quelconque des revendications précédentes, **caractérisé en ce que** la au moins une ouverture centrale à travers laquelle le conduit d'alimentation et le conduit d'évacuation s'étendent est de forme circulaire.

6. Dispositif selon la revendication 5, **caractérisé en ce qu'**à l'endroit d'au moins la une ouverture centrale, le conduit d'alimentation et/ou le conduit d'évacuation ont une section transversale essentiellement en forme de segments.

7. Dispositif selon la revendication 4 ou 5, **caractérisé en ce que** le diamètre de la au moins une ouverture centrale a une dimension d'au moins 10 mètres et par ailleurs de préférence d'au moins 12 mètres.

8. Dispositif selon l'une quelconque des revendications précédentes, **caractérisé en ce que** chaque fond porteur (11, 12, 13) est annulaire, la dimension du diamètre intérieur étant d'au moins 10 mètres et par ailleurs de préférence, d'au moins 12 mètres.

9. Dispositif selon la revendication 8, **caractérisé en ce que** le fond porteur (11, 12, 13) a un enjambement radial d'au moins 7 mètres entre le diamètre intérieur et le diamètre extérieur.

10. Dispositif selon la revendication 7, 8 ou 9, **caractérisé en ce que** le fond porteur (11, 12, 13) peut tourner autour d'un axe de rotation, qui s'étend à travers la ligne centrale de la forme annulaire.

11. Dispositif selon l'une quelconque des revendications précédentes, **caractérisé en ce que** les moyens de conditionnement d'air se trouvent en dessous du niveau du fond d'étage (7), sous le premier fond porteur (11) pour les céréales à faire germer.

12. Dispositif selon l'une quelconque des revendications précédentes,'**caractérisé en ce que** les moyens de conditionnement d'air se trouvent au-dessus du niveau du fond d'étage, au-dessus du premier fond porteur (13) de la tour (1, 2).

13. Dispositif selon l'une quelconque des revendications précédentes, **caractérisé en ce que** les moyens de conditionnement d'air se trouvent à l'intérieur de la périphérie extérieure des fonds d'étages.

14. Dispositif selon l'une quelconque des revendications précédentes, **caractérisé en ce qu'**on a prévu un fond porteur supplémentaire pour soutenir des céréales germées à faire sécher sous le niveau des fonds d'étages sous le fond porteur inférieur pour les céréales à faire germer.

15. Dispositif selon la revendication 14, **caractérisé en ce que** le fond porteur supplémentaire pour les céréales germées à faire sécher a des dimensions analogues à celles du fond porteur pour les céréales à faire germer.

16. Dispositif selon la revendication 1, **caractérisé en ce que** le fond porteur (11, 12, 13) est perméable à l'air, de préférence perforé.
